# EUROPEAN PATENT APPLICATION

(11) **EP 4 759 127 A1**
(43) Date of publication of application: **17.06.2026**
(21) Application number: 25215126.1
(22) Date of filing: 12.11.2025
(51) Int. Cl.: A01F 15/08, A01F 15/07

(54) **ROUND BALER WITH BEARING OVERLOAD PROTECTION**

(30) Priority: 16.12.2024 US 202418981836
(71) Applicant: Deere & Company, Moline, IL 61265 (US)
(72) Inventor: EAKINS, NOLAN D, 68163 Mannheim (DE); COFFMAN, BART A, 68163 Mannheim (DE); DERSCHEID, DANIEL E, 68163 Mannheim (DE); EVERHART, JACOB W, 68163 Mannheim (DE)
(74) Representative: Stein, Stefan

(57) **Abstract**

A baler implement includes a bale formation system defining a baling chamber configured for forming crop material into a bale having a cylindrical shape, and a roller configured to apply a compressive force against the crop to form the bale. A bale size sensor is operable to sense data related to a diametric size of the bale within the baling chamber. A baler controller determines a current diameter of the bale during formation thereof within the baling chamber, and determines if the current diameter of the bale is equal to a pressure release diameter threshold. When the current diameter of the bale is equal to the pressure release diameter threshold, the baler controller may automatically control the bale formation system to decrease the compressive force of the roller applied against the bale to prevent overloading and damaging bearings of the roller.

## Description

### TECHNICAL FIELD

The disclosure generally relates to a baler implement, and to a method of controlling a baler implement.

### BACKGROUND

There are a wide variety of different types of baler implements that generate bales of material. Such baler implements can bale materials like hay, straw, silage, cotton, recycled paper products, etc. One type of baler implement forms material into a bale having a cylindrical shape, often referred to as a round bale. Such baler implements are often referred to as a round baler. One configuration of round baler includes a plurality of forming belts forming a baling chamber and running in an endless loop about a plurality of rollers. In one implementation, some of the rollers are repositioned during the formation of the bale to increase the size of the baling chamber as a diametric size of the bale increases to maintain a constant pressure against the bale as the round bale is formed. A round baler of this configuration is often referred to as a variable chamber round baler. In other implementations, the rollers are arranged in a fixed position and are not repositionable. Such baler implements may be referred to as a fixed chamber round baler.

During formation of the round bale within the baling chamber, the forming belts, which are supported by the rollers, exert a pressure on the crop material to compress the crop material into the final shape of the bale. The rollers are rotatably supported by bearings, which resist the compressive force that the rollers exert against the bale. Round balers are configured to form bales having no greater than a maximum intended diameter. When a bale is formed in excess of the maximum intended diameter, the compressive force between the bale and the rollers greatly increases, causing excessive wear to the bearings supporting the rollers. Repeated formation of bales in excess of the maximum intended diameter may reduce the useful life of the bearings supporting the rollers.

### SUMMARY

A baler implement is provided. The baler implement includes a support structure and a housing supported by the support structure. A gate is rotatably coupled to the housing for rotation relative to the housing about a gate rotation axis, between a closed position and an open position. A bale formation system is disposed between the housing and the gate. The bale formation system includes a roller and defines a baling chamber configured for forming crop material into a bale having a cylindrical shape. A latch mechanism is moveable between an engaged position configured to secure the gate in the closed position relative to the housing, and a release position configured to allow relative movement between the gate and the housing. A latch release is coupled to the latch mechanism. The latch release is configured to move the latch mechanism from the engaged position into the release position. A bale size sensor is operable to sense data related to a diametric size of the bale within the baling chamber and generate a data signal indicative of the sensed data. A baler controller includes a processor and a memory having a bearing protection algorithm stored thereon. The processor is operable to execute the bearing protection algorithm to determine a current diametric size of the bale within the baling chamber from the data signal received from the bale size sensor. The baler controller may then determine if the current diametric size of the bale is equal to a pressure release diameter threshold. When the current diametric size of the bale is equal to the pressure release diameter threshold, the baler controller may automatically control the bale formation system to decrease the compressive force of the roller applied against the bale. In one example implementation, the baler controller may automatically actuate the latch release to move the latch mechanism from the engaged position to the release position to relieve baling pressure. By doing so, the baler controller may automatically relieve baling pressure when the diameter of the current bale being formed nears a maximum intended bale diameter of the baler implement in order to prevent or limit overpressure damage to bearings of the rollers of the bale formation system.

In one aspect of the disclosure, the processor may be operable to execute the bearing protection algorithm to determine if the current diametric size of the bale is equal to a warning diameter threshold. The warning diameter threshold is less than the pressure release diameter threshold. When the current diametric size of the bale is equal to the warning diameter threshold, the baler controller may communicate a notification signal to a communicator. The notification signal is operable to cause the communicator to generate a warning notification. In doing so, the baler controller may notify an operator that the current diameter of the bale is approaching a maximum intended bale diameter of the baler implement, thereby indicating that the formation of the current bale should be stopped, and the current bale ejected. Because the warning diameter threshold is less than the pressure release diameter threshold, the warning notification may be generated and communicated to the operator prior to the baler controller automatically actuates the latch release to relieve the baling pressure.

In one aspect of the disclosure, the communicator may include, but is not limited to, one of a visual indicator, e.g., a warning or malfunction indicator light, an audio indicator, e.g., an audible alarm communicated via a speaker, a display screen, e.g., a touchscreen control, or a haptic communicator, e.g., a vibrating seat or control stick.

In one aspect of the disclosure, the processor may be operable to execute the bearing protection algorithm to determine if the current diametric size of the bale is equal to an oversize bale diameter threshold. The oversize bale diameter threshold is greater than the pressure release diameter threshold, and is generally associated with a maximum intended bale size of the baler implement. When the current diametric size of the bale is equal to the oversize bale diameter threshold, the baler controller may increment a current value of an oversize bale counter to define a revised value of the oversize bale counter. The baler controller may then store the revised value of the oversize bale counter in the memory of the baler controller. By doing so, a total number of oversized bales formed by the baler implement may be tracked and used for diagnostic and/or repair operations.

In one aspect of the disclosure, the bale size sensor may include, but is not limited to, a position sensor that is coupled to a component of the bale formation system that is configured to change a position relative to the support structure as the diametric size of the bale changes. For example, the bale size sensor may include a position sensor coupled to a tension arm of the bale formation system that moves one or more of the rollers to tension the forming belts. In other implementations, the bale size sensor may include, but is not limited to, an optical sensor, a lidar sensor, a radar sensor, or some other sensor capable of sensing data related to a relative distance and/or a position of a component of the bale formation system.

In one aspect of the disclosure, the latch release may include, but is not limited to, one of an electric actuator or a hydraulic cylinder. The latch release may include any device and/or combination of components capable of moving the latch mechanism from the engaged position to the release position.

In one aspect of the disclosure, the bale formation system includes a plurality of rollers, with each of the plurality of rollers including at least one respective bearing rotatably supporting the roller. The bearings of each respective roller rotatably support the roller relative to a structural component of the baler implement, e.g., one of the housing or the gate. In one implementation, the plurality of rollers may support one or more forming belts that rotate in an endless fashion about the plurality of rollers. In one implementation, A first group of the plurality of rollers may be moveable rollers to control a diametric size of the baling chamber to define a variable size baling chamber.

In one aspect of the disclosure, the baler implement may further include a latch striker. The latch striker is attached to one of the housing and the gate, with the latch mechanism attached to the other of the housing and the gate. The latch mechanism is operable to grasp and secure the latch striker when the latch mechanism is disposed in the engaged position, thereby securing the gate in position relative to the housing. When the latch mechanism is disposed in the release position, the latch mechanism is disengaged from the latch striker, allowing the gate to move relative to the housing.

A method of controlling a baler implement is also provided. The method includes determining a current diameter of a cylindrical bale being formed within a baling chamber of a bale formation system with a baler controller. The bale formation system includes a roller configured to apply a compressive force against the bale during formation thereof. The baler controller may then determine if the current diameter of the cylindrical bale is equal to a pressure release diameter threshold. When the current diametric size of the bale is equal to the pressure release diameter threshold, the baler controller may automatically control the bale formation system to decrease the compressive force applied by the roller against the bale to prevent or limit overpressure damage to bearings of the roller.

In one aspect of the method of controlling the baler implement described herein, the baler controller may determine if the current diameter of the cylindrical bale is equal to a warning diameter threshold. The warning diameter threshold is less than the pressure release diameter threshold. When the current diameter of the cylindrical bale is equal to the warning diameter threshold, the baler controller may automatically communicate a notification signal to a communicator, whereby the notification signal is operable to cause the communicator to generate a warning notification.

In one aspect of the method of controlling the baler implement described herein, the baler controller may determine if the current diametric size of the bale is equal to an oversize bale diameter threshold. The oversize bale diameter threshold is greater than the pressure release diameter threshold. When the current diametric size of the bale is equal to the oversize bale diameter threshold, the baler controller may increment a current value of an oversize bale counter to define a revised value of the oversize bale counter, and store the revised value of the oversize bale counter in a memory of the baler controller.

Accordingly, the baler implement and the method described herein may automatically track the current diametric size of the bale being formed within the bale formation system. When the current diametric size the bale is equal to the warning diameter threshold, the baler controller may automatically generate the notification signal to the communicator to notify an operator that the current diameter of the bale is approaching a maximum intended bale size of the baler implement, and that formation of that bale should be stopped. If the operator fails to stop baling operations and the diametric size of the bale continues to increase, when the current diametric size of the bale is equal to the pressure release diameter threshold, the baler controller may automatically release the pressure of the baling chamber, for example, by actuating the latch release to move the latch mechanism into the release position and allow the gate to move relative to the housing, thereby relieving tension in the forming belts and reducing the baling pressure to limit potential damage to bearings of the rollers that may be caused by excessive pressure associated with an oversized bale. If the operator fails to stop baling operations and the diametric size of the bale continues to increase, when the current diametric size of the bale is equal to the oversize bale diameter threshold, which may be defined to approximately equal the maximum intended bale diameter of the baler implement, the baler controller may increment the oversize bale counter to track a total number of oversized bales produced by the baler implement.

The above features and advantages and other features and advantages of the present teachings are readily apparent from the following detailed description of the best modes for carrying out the teachings when taken in connection with the accompanying drawings.

### BRIEF DESCRIPTION OF THE DRAWINGS

FIG. 1 is a schematic side view of a baler implement showing a gate in a closed position for forming a bale.
FIG. 2 is a schematic side view of the baler implement showing the gate in an open position ejecting the bale onto the ground surface.
FIG. 3 is a schematic side view of the baler implement showing a latch mechanism in an engaged position restraining the gate.
FIG. 4 is a schematic side view of the baler implement showing the latch mechanism in a release position allowing movement of the gate.
FIG. 5 is a flowchart representing a method of controlling the baler implement.
FIG. 6 is a schematic side view of the baler implement showing the gate partially opened to decrease baling pressure to relieve stress on the bearings of the rollers of the baler implement.

### DETAILED DESCRIPTION

Those having ordinary skill in the art will recognize that terms such as "above," "below," "upward," "downward," "top," "bottom," etc., are used descriptively for the figures, and do not represent limitations on the scope of the disclosure, as defined by the appended claims. Furthermore, the teachings may be described herein in terms of functional and/or logical block components and/or various processing steps. It should be realized that such block components may be comprised of any number of hardware, software, and/or firmware components configured to perform the specified functions.

The terms "forward", "rearward", "left", and "right", when used in connection with a moveable implement and/or components thereof are usually determined with reference to the direction of travel during operation, but should not be construed as limiting. The terms "longitudinal" and "transverse" are usually determined with reference to the fore-and-aft direction of the implement relative to the direction of travel during operation, and should also not be construed as limiting.

Terms of degree, such as "generally", "substantially" or "approximately" are understood by those of ordinary skill to refer to reasonable ranges outside of a given value or orientation, for example, general tolerances or positional relationships associated with manufacturing, assembly, and use of the described embodiments.

As used herein, "e.g." is utilized to non-exhaustively list examples, and carries the same meaning as alternative illustrative phrases such as "including," "including, but not limited to," and "including without limitation." As used herein, unless otherwise limited or modified, lists with elements that are separated by conjunctive terms (e.g., "and") and that are also preceded by the phrase "one or more of," "at least one of," "at least," or a like phrase, indicate configurations or arrangements that potentially include individual elements of the list, or any combination thereof. For example, "at least one of A, B, and C" and "one or more of A, B, and C" each indicate the possibility of only A, only B, only C, or any combination of two or more of A, B, and C (A and B; A and C; B and C; or A, B, and C). As used herein, the singular forms "a", "an" and "the" are intended to include the plural forms as well, unless the context clearly indicates otherwise. Further, "comprises," "includes," and like phrases are intended to specify the presence of stated features, steps, operations, elements, and/or components, but do not preclude the presence or addition of one or more other features, steps, operations, elements, components, and/or groups thereof.

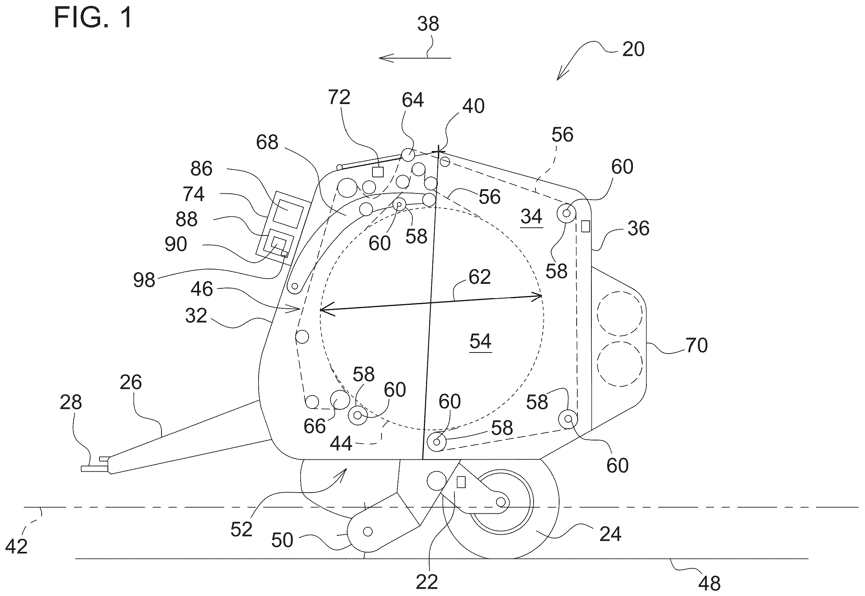

Referring to the Figures, wherein like numerals indicate like parts throughout the several views, a baler implement is generally shown at 20. Referring to FIGS. 1, 2 and 5, the baler implement 20 may alternatively be referred to as a round baler. Referring to the Figures, the baler implement 20 includes a support structure 22. The support structure 22 may include, but is not limited to, a frame and other structural components connected together to provide structural support to other components and panels of the baler implement 20. One or more ground engaging elements 24, such as but not limited to one or more wheels and/or tracks, are attached to and rotatably supported by the support structure 22. A tongue 26 may be coupled to the support structure 22 at a forward end of the of the support structure 22. A hitch arrangement 28 may be included with the tongue 26. The hitch arrangement 28 may be used to attach the baler implement 20 to a traction unit (not shown), such as but not limited to an agricultural tractor. In other embodiments, the baler implement 20 may be self-propelled, in which case the traction unit and the baler implement 20 are configured as a single, self-propelled vehicle.

The baler implement 20 includes a housing 32. The housing 32 is attached to and supported by the support structure 22. The housing 32 may include one or more walls or panels that at least partially enclose and/or define an interior region 34. The baler implement 20 further includes a gate 36. The gate 36 may include one or more walls or panels that at least partially enclose and/or define the interior region 34. As such, the housing 32 and the gate 36 cooperate to define the interior region 34 therebetween.

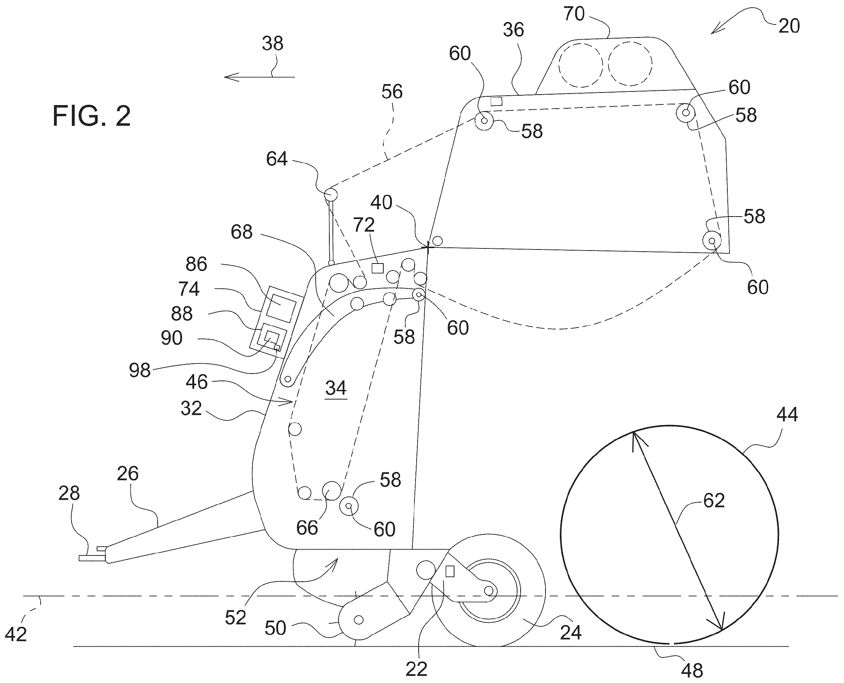

The gate 36 is attached to and rotatably supported by the housing 32. The gate 36 is positioned adjacent a rearward end of the support structure 22 relative to a direction of travel 38 of the baler implement 20 while gathering crop material, and is pivotably moveable about a gate rotation axis 40. The gate rotation axis 40 is generally horizontal and perpendicular to a central longitudinal axis 42 of the baler implement 20. The central longitudinal axis 42 of the baler implement 20 extends between the forward end and the rearward end of the baler implement 20. The gate 36 is moveable between a closed position (shown in FIG. 1) for forming a bale 44 within a bale formation system 46 disposed within the interior region 34, and an open position (shown in FIG. 2) for discharging the bale 44 from the interior region 34 onto a ground surface 48.

The baler implement 20 includes a pick-up 50 disposed proximate the forward end of the support structure 22. The pick-up 50 gathers crop material from the ground surface 48 and directs the gathered crop material toward and into an inlet 52 of the interior region 34. The pickup may include, but is not limited to tines, forks, augers, conveyors, baffles, etc., for gathering and moving the crop material. The baler implement 20 may be equipped with a pre-cutter (not shown), disposed between the pickup and the inlet 52. As such, the pre-cutter is disposed downstream of the pickup and upstream of the inlet 52 relative to movement of the crop material. As is understood by those skilled in the art, the pre-cutter cuts or chops the crop material into smaller pieces.

The bale formation system 46 is disposed within the interior region 34, between the housing 32 and the gate 36, and defines a baling chamber 54, within which the bale 44 is formed. The bale formation system 46 is operable to form the bale 44 to have a cylindrical shape. The bale formation system 46 may be configured as a fixed chamber system or a variable chamber system. As understood by those skilled in the art, although not shown in the Figures, a fixed chamber system includes a plurality of rollers attached to and supported by the support structure, the housing, and/or the gate. Each of the plurality of rollers may include a respective bearing at each longitudinal end thereof connecting the respective roller to the support structure, the housing, and/or the gate. As such, the bearing of reach respective roller in a fixed chamber system rotatably support the roller. During the formation of the bale within the baling chamber, a compressive force between the bale and the rollers is generated. As the diametric size of the bale increases, the magnitude of the compressive force increases. It should be appreciated that the stress applied to the bearings supporting each respective roller increases as the magnitude of the compressive force between the bale and the rollers increases. The plurality of rollers extend transverse to the direction of travel during operation, and their respective centerlines are arranged in a circular orientation to define a cylindrical baling chamber therebetween. The plurality of rollers are fixed in position relative to the support structure during formation of the bale within the baling chamber, thereby defining the baling chamber having a fixed size.

Referring to FIGS. 1, 2 and 5, and as is understood by those skilled in the art, the example implementation of the baler implement 20 is shown configured having a variable chamber system. The variable chamber system includes at least one, and may include a plurality of longitudinally extending side-by-side forming belts 56 that are supported by a plurality of rollers 58. Each of the plurality of rollers 58 may include a respective bearing 60 at each longitudinal end thereof connecting the respective roller 58 to the support structure 22, the housing 32, and/or the gate 36. As such, the bearings 60 of reach respective roller 58 in a variable chamber system rotatably support that roller 58.

The forming belts 56 define the baling chamber 54 and move in an endless loop to form crop material into the bale 44 having the cylindrical shape. The bale 44 is formed by the forming belts 56 and one or more side walls of the housing 32 and gate 36. As is understood by those skilled in the art, a group of the plurality of rollers 58 is moveable relative to the support structure 22, the housing 32, and/or the gate 36 during formation of the bale 44 to control the position of the forming belts 56 defining the baling chamber 54 to vary the diametric size 62 of the baling chamber 54 as the diametric size 62 of the bale 44 increases. In this manner, the forming belts 56 may maintain a constant pressure against the bale 44 during formation thereof as the diametric size 62 of the bale 44 increases.

The plurality of rollers 58 support the forming belts 56. At least one of the rollers 58 is a take-up roller 64. The take-up roller 64 is moveably coupled to one of the gate 36 or the housing 32, and is operable or moveable to decrease slack in the forming belts 56 when the gate 36 of the baler implement 20 is opened. Additionally, at least one of the plurality of rollers 58 may include a drive roller 66 that is operable to drive the forming belts 56 in the endless loop through frictional engagement between the forming belts 56 and the drive roller 66.

In the example implementation shown in the figures and described herein, in which the bale formation system 46 includes the variable chamber baler, the crop material is directed through the inlet 52 and into the baling chamber 54, whereby the forming belts 56 roll the crop material in a spiral fashion into the bale 44 having the cylindrical shape. The forming belts 56 apply a constant pressure to the crop material as the crop material is formed into the bale 44. A belt tensioner 68 continuously moves one or more of the rollers 58, and thereby the forming belts 56, radially outward relative to the centerline of the cylindrical bale 44 as a diameter of the bale 44 increases. The belt tensioner 68 maintains the appropriate tension in the belts to obtain the desired density of the crop material.

During the formation of the bale 44 within the baling chamber 54, a compressive force between the bale 44 and the forming belts 56 is generated. Since the forming belts 56 are supported by the rollers 58, the rollers 58 are also subjected to the compressive force between the bale 44 and the forming belts 56. As the diametric size 62 of the bale 44 increases, the position of some of the rollers 58 is changed to change the size of the baling chamber 54 and maintain the magnitude of the compressive force between the bale 44 and the forming belts 56. However, once the rollers 58 have moved into a position associated with a maximum intended diameter of the bale 44, the magnitude of the compressive force between the bale 44 and the forming belts 56 increases, thereby increasing the forces applied against the rollers 58 It should be appreciated that the stress applied to the bearings 60 supporting each respective roller 58 increases as the magnitude of the compressive force between the bale 44 and the rollers 58 increases.

As shown in FIGS. 1, 2 and 5, the baler implement 20 may include a wrap system 70. The wrap system 70 is operable to wrap the bale 44 with a wrap material inside the baling chamber 54. Once the bale 44 is formed to a desired size, the wrap system 70 feeds the wrap material into the baling chamber 54 to wrap the bale 44 and thereby secure the crop material in a tight package and maintain the desired shape of the bale 44. The wrap material may include, but is not limited to, a twine, a net mesh, or a solid plastic wrap. Movement of the gate 36 into the open position simultaneously moves the belts clear of the formed bale 44 and allows the formed and wrapped bale 44 to be discharged through the rearward end of the baling chamber 54.

The baler implement 20 further includes a bale size sensor 72. The bale size sensor 72 is operable to sense data related to the diametric size 62 of the bale 44 within the baling chamber 54. The bale size sensor 72 generates and communicates a data signal 96 indicative of the sensed data. As such, the data signal 96 is indicative of the sensed current diametric size 62 of the bale 44 within the baling chamber 54. The bale size sensor 72 communicates the data signal 96 to a baler controller 74, described in greater detail below. The bale size sensor 72 may include any device and/or system capable of sensing the data related to the current diametric size 62 of the bale 44. For example, in one implementation, the bale size sensor 72 may include a position sensor that is coupled to a component of the bale formation system 46 that is configured to change a position relative to the support structure 22 as the diametric size 62 of the bale 44 changes. In one example, the bale size sensor 72 may include a position sensor coupled to the belt tensioner 68, and operable to sense data related to a position of the belt tensioner 68. The position sensor may include, but is not limited to, a rotary potentiometer and/or sensor, a linear potentiometer and/or sensor. In other implementations, the bale size sensor 72 may include an optical sensor operable to capture an image including relative distance data. In yet other implementations, the bale size sensor 72 may include a lidar sensor and/or a radar sensor configured to detect and/or sense a current position of the component, e.g., an exterior surface of the bale 44 within the baling chamber 54, the belt tensioner 68 or the take-up roller 64, based on the transmission and reception of electromagnetic waves and/or light waves. The baler controller 74 may include software capable of determining the position of the component based on the data sensed by the bale size sensor 72, e.g., image data or the like. It should be appreciated that the bale size sensor 72 may include some other device or system not specifically described herein.

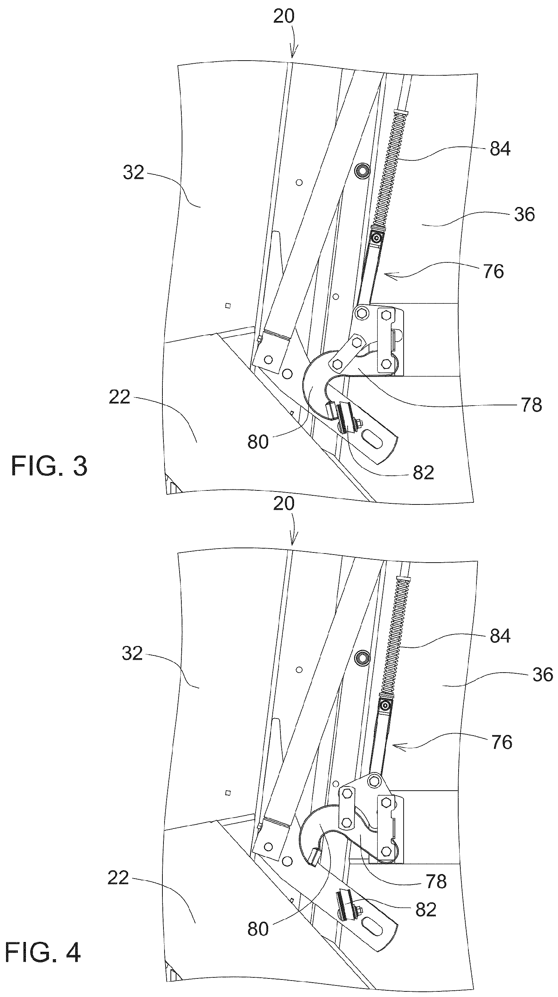

Referring to FIGS. 3 and 4, the baler implement 20 may further include a latch mechanism 76. The latch mechanism 76 may be moveable between an engaged position, shown in FIG. 3, configured to secure the gate 36 in the closed position relative to the housing 32, and a release position, shown in FIG. 4, configured to allow relative movement between the gate 36 and the housing 32. In one example implementation, the latch mechanism 76 may include, but is not limited to a rotatable lever arm 78 or plate having a hook 80 shaped to grasp a latch striker 82. The latch striker 82 may be attached to one of the housing 32 and the gate 36, with the latch mechanism 76 attached to the other of the housing 32 and the gate 36. Actuation of the latch mechanism 76 into the engaged position moves the hook 80 into locking engagement with the latch striker 82. Movement of the latch mechanism 76 into the release position disengages the hook 80 from the latch striker 82, thereby allowing the gate 36 to move relative to the housing 32. It should be appreciated that the latch mechanism 76 and the latch striker 82 may differ from the example implementation described herein, and should be interpreted broadly to include any structure configured to selectively secure the gate 36 relative to the housing 32.

A latch release 84 may be coupled to the latch mechanism 76. The latch release 84 may be configured to move the latch mechanism 76 from the engaged position into the release position. Additionally, the latch release 84 may be configured to operate in reverse, to move the latch mechanism 76 from the release position into the engaged position. As such, the latch release 84 may be defined as a latch actuator capable of moving the latch mechanism 76 between the engaged position and the release position. In one example implementation, the latch release 84 may include, but is not limited to, one of an electric actuator, for example, a linear electric actuator or a rotary electric actuator. In another implementation, the latch release 84 may include a hydraulic cylinder. In another implementation, the latch release 84 may include a combination of levers and/or connections mechanically interconnecting the latch release 84 and the latch mechanism. In one example implementation, the latch release 84 may be configured to rotate the lever arm 78 such that the hook 80 is moved into and out our interlocking engagement with the latch striker 82. The latch release 84 may be actuated by a signal, such as but not limited to, an electrical control signal, a hydraulic fluid control signal, or pneumatic control signal, etc.

Referring to FIGS. 1, 2 and 5, the baler controller 74 may be disposed in communication with the bale size sensor 72 and the latch release 84. The baler controller 74 is operable to receive the data signal 96 from the bale size sensor 72, and control operation of the bale formation system 46 and/or the latch release 84. While the baler controller 74 is generally described herein as a singular device, it should be appreciated that the baler controller 74 may include multiple devices linked together to share and/or communicate information therebetween. Furthermore, it should be appreciated that the baler controller 74 may be located on the baler implement 20 or located remotely from the baler implement 20.

The baler controller 74 may alternatively be referred to as a computing device, a computer, a controller, a control unit, a control module, a module, etc. The baler controller 74 includes a processor 86, a memory 88, and all software, hardware, algorithms, connections, sensors, etc., necessary to manage and control the operation of the baler formation system. As such, a method may be embodied as a program or algorithm operable on the baler controller 74. It should be appreciated that the baler controller 74 may include any device capable of analyzing data from various sensors, comparing data, making decisions, and executing the required tasks.

As used herein, "baler controller 74" is intended to be used consistent with how the term is used by a person of skill in the art, and refers to a computing component with processing, memory, and communication capabilities, which is utilized to execute instructions (i.e., stored on the memory 88 or received via the communication capabilities) to control or communicate with one or more other components. In certain embodiments, the baler controller 74 may be configured to receive input signals in various formats (e.g., hydraulic signals, voltage signals, current signals, CAN messages, optical signals, radio signals), and to output command or communication signals in various formats (e.g., hydraulic signals, voltage signals, current signals, CAN messages, optical signals, radio signals).

The baler controller 74 may be in communication with other components on the baler implement 20, such as hydraulic components, electrical components, and operator inputs within an operator station of an associated work vehicle. The baler controller 74 may be electrically connected to these other components wirelessly or via a wiring harness such that messages, commands, and electrical power may be transmitted between the baler controller 74 and the other components. Although the baler controller 74 is referenced in the singular, in alternative embodiments the configuration and functionality described herein can be split across multiple devices using techniques known to a person of ordinary skill in the art.

The baler controller 74 may be embodied as one or multiple digital computers or host machines each having one or more processors, read only memory (ROM), random access memory (RAM), electrically-programmable read only memory (EPROM), optical drives, magnetic drives, etc., a high-speed clock, analog-to-digital (A/D) circuitry, digital-to-analog (D/A) circuitry, and any required input/output (I/O) circuitry, I/O devices, and communication interfaces, as well as signal conditioning and buffer electronics.

The computer-readable memory 88 may include any non-transitory/tangible medium which participates in providing data or computer-readable instructions. The memory 88 may be non-volatile or volatile. Non-volatile media may include, for example, optical or magnetic disks and other persistent memory. Example volatile media may include dynamic random access memory (DRAM), which may constitute a main memory. Other examples of embodiments for memory include a floppy, flexible disk, or hard disk, magnetic tape or other magnetic medium, a CD-ROM, DVD, and/or any other optical medium, as well as other possible memory devices such as flash memory.

The baler controller 74 includes the tangible, non-transitory memory 88 on which are recorded computer-executable instructions, including a bearing protection algorithm 90. The processor 86 of the baler controller 74 is configured for executing the bearing protection algorithm 90. The bearing protection algorithm 90 implements a method of controlling the baler implement 20, described in detail below.

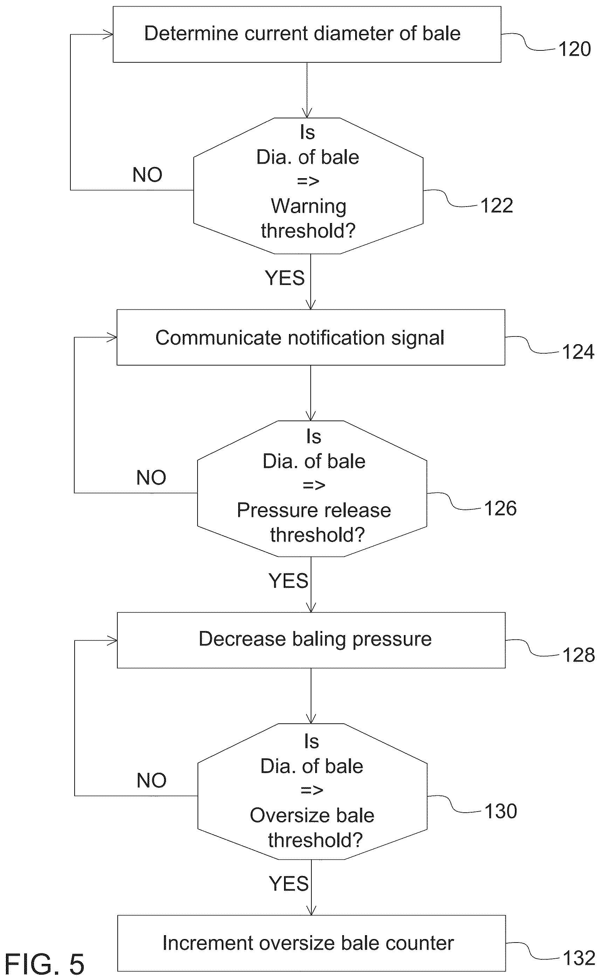

The method of controlling the baler implement 20 includes the baler controller 74 determining a current diametric size 62 of the bale 44 within the baling chamber 54 from the data signal 96 received from the bale size sensor 72. The step of determining the current diametric size 62 of the bale 44 is generally indicated by box 120 shown in FIG. 5. As described above, the diameter of the bale 44 continuously increases within the baling chamber 54 during formation. The bale size sensor 72 continuously monitors and senses data related to the current diametric size 62 of the bale 44, and communicates the data signal 96 to the baler controller 74, which in turn uses the data signal 96 to determine the current diametric size 62 of the bale 44.

The specific manner in which the baler controller 74 may determine the diametric size 62 of the bale 44 depends upon the specific type of data sensed by the bale size sensor 72. For example, if the bale size sensor 72 senses data related to a position of the belt tensioner 68, then the baler controller 74 may correlate the position of the belt tensioner 68 and/or an amount of movement of the belt tensioner 68 to a diametric size 62 of the bale 44 using, an equation, a relationship, a look-up chart, etc. In other implementations, if the bale size sensor 72 senses an image of the belt tensioner 68, the baler controller 74 may analyze the image data to determine a relative distance to the belt tensioner 68, and may then correlate the relative distance to the belt tensioner 68 to the diametric size 62 of the bale 44. It should be appreciated that the baler controller 74 may determine the diametric size 62 of the bale 44 in some other manner not described herein, suitable to the particular type of data sensed by the bale size sensor 72.

Once the current diametric size 62 of the bale 44 is determined, the baler controller 74 may then compare the current diametric size 62 of the bale 44 to a warning diameter threshold to determine if the current diametric size 62 of the bale 44 is less than the warning diameter threshold, or if the current diametric size 62 of the bale 44 is equal to or greater than the warning diameter threshold. The step of determining if the current diametric size 62 of the bale 44 is equal to or greater than the warning diameter threshold is generally indicated by box 122 shown in FIG. 5. The warning diameter threshold may be defined as a maximum recommended diametric size 62 of the bale 44, and may generally indicate that bale 44 formation should be stopped, and the bale 44 wrapped and ejected from the baler implement 20.

When the baler controller 74 determines that the current diametric size 62 of the bale 44 is less than the warning diameter threshold, then the baler controller 74 may take no action. However, if the baler controller 74 determines that the current diametric size 62 of the bale 44 is equal to or greater than the warning diameter threshold, then the baler controller 74 may automatically generate and communicate a notification signal 94 to a communicator 92. The step of communicating the notification signal 94 is generally indicated by box 124 shown in FIG. 5. The baler controller 74 may initiate the notification signal 94 when the current size of the bale 44 initially equals the warning diameter threshold, and may continue to generate and communicate the notification signal 94 while the current size of the bale 44 is greater than the warning diameter threshold.

The communicator 92 may include, but is not limited to, one of a visual indicator, e.g., a warning or malfunction indicator light, an audio indicator, e.g., an audible alarm communicated via a speaker, a display screen, e.g., a touchscreen control, or a haptic communicator 92, e.g., a vibrating seat or control stick. The notification signal 94 is operable to cause the communicator 92 to generate a warning notification, such as but not limited to illuminating a warning light, generating an audio warning sound, generating a communication on a display screen, vibrating a seat or control stick of the associated tow vehicle, etc.

The baler controller 74 may further determine if the current diametric size 62 of the bale 44 is equal to a pressure release diameter threshold to determine if the current diametric size 62 of the bale 44 is less than the pressure release diameter threshold, or if the current diametric size 62 of the bale 44 is equal to or greater than the pressure release diameter threshold. The step of determining if the current diametric size 62 of the bale 44 is equal to or greater than the pressure release diameter threshold is generally indicate by box 126 shown in FIG. 5. The pressure release diameter threshold may be defined as a maximum intended diametric size 62 of the bale 44, and may generally indicate a maximum bale 44 diameter to prevent overload damage to the bearings 60 of the rollers 58 of the bale formation system 46. The pressure release diameter threshold is a diametric size 62 of the bale 44 that is greater than the warning diameter threshold. Stated oppositely, the warning diameter threshold is a diametric size 62 of the bale 44 that is less than the pressure release diameter threshold. As such, as the diametric size 62 of the bale 44 increases, the bale 44 diameter will first increase to the warning diameter threshold, and if formation is not stopped, will continue to increase toward the pressure release diameter threshold.

When the baler controller 74 determines that the current diametric size 62 of the bale 44 is greater than the warning diameter threshold, but is less than the pressure release diameter threshold, then the baler controller 74 may take no additional action beyond generating and communicating the notification signal 94. However, if the baler controller 74 determines that the current diametric size 62 of the bale 44 is equal to or greater than the pressure release diameter threshold, then the baler controller 74 may automatically control the bale formation system 46 to decrease the compressive force applied against the rollers 58, i.e., the force between the bale 44 and the rollers 58. The step of decreasing the compressive force applied against the rollers 58 is generally indicated by box 128 shown in FIG. 5.

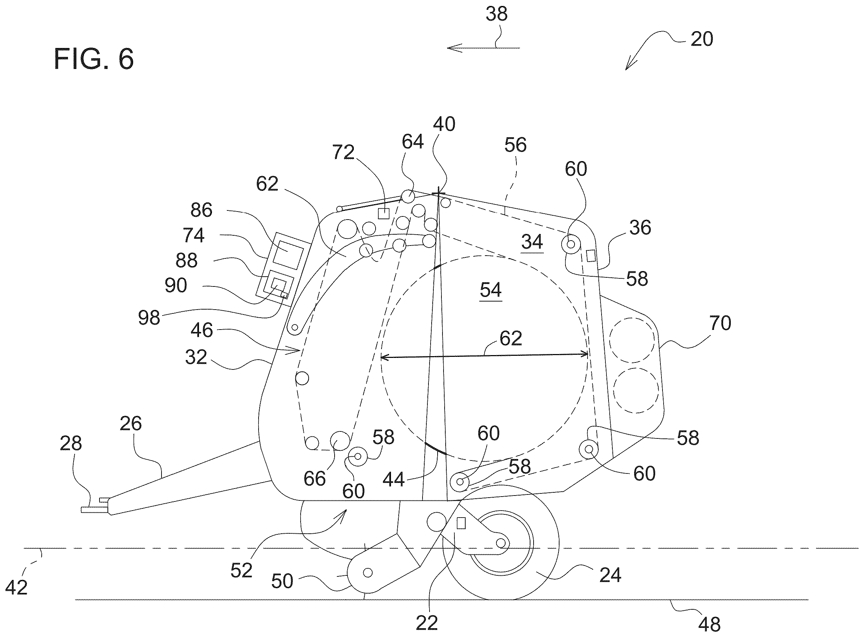

In one example implementation, the baler controller 74 may automatically decrease the compressive force applied to the rollers 58 by automatically actuating the latch release 84 to move the latch mechanism 76 from the engaged position to the release position. Moving the latch mechanism 76 into the release position allows the gate 36 to move relative to the housing 32. The gate 36 may thereafter move away from the housing 32, such as shown in FIG. 6, thereby relieving or lessening the compressive force between the rollers 58 and the bale 44 without ejecting the bale 44 from the baler implement 20. Reducing the compressive forces applied to the rollers 58 and/or preventing the compressive force applied to the rollers 58 from increasing further, prevents or limits potential damage to the bearings 60 of the rollers 58 that may be caused by overloading the bearings 60, such as may occur if the diametric size 62 of the bale 44 continues to increase beyond the pressure release diameter threshold. It should be appreciated that the baler controller 74 may control and/or adjust operation of the bale formation system 46 in some other manner not described herein that results in the pressure applied to the rollers 58 remaining constant and/or decreasing.

The baler controller 74 may further determine if the current diametric size 62 of the bale 44 is equal to an oversize bale diameter threshold to determine if the current diametric size 62 of the bale 44 is less than the oversize bale diameter threshold, or if the current diametric size 62 of the bale 44 is equal to or greater than the oversize bale diameter threshold. The step of determining if the current diametric size 62 of the bale 44 is equal to or greater than the oversize bale diameter threshold is generally indicated by box 130 shown in FIG. 5. The oversize bale diameter threshold may be defined as a maximum intended diametric size 62 of the bale 44 within the baling chamber 54, i.e., the maximum bale 44 diameter the baler implement 20 is intended to form. The oversize bale diameter threshold may be generally defined to equal a value associated with likely damage to the bearings 60 of the rollers 58. The oversize bale diameter threshold is a diametric size 62 of the bale 44 that is greater than the pressure release diameter threshold.

When the baler controller 74 determines that the current diametric size 62 of the bale 44 is equal to the oversize bale diameter threshold, the baler controller 74 may increment a current value of an oversize bale counter 98 to define a revised value of the oversize bale counter 98. The step of incrementing the oversize bale counter 98 is generally indicated by box 132 shown in FIG. 5. The oversize bale counter 98 is a variable saved in the memory 88 of the baler controller 74 that tracks the number of occurrences in which a bale 44 was formed to a diametric size 62 that equaled or exceeded the oversize bale diameter threshold. Upon each occurrence in which the current diametric size 62 of the bale 44 is determined to be greater than the oversize bale diameter threshold, the value of the oversize bale counter 98 may be incremented, for example, incremented by a value of one, to define the revised value of the oversize bale counter 98. The revised value of the oversize bale counter 98 may be stored in the memory 88 of the baler controller 74, and may be used and/or referenced for future maintenance planning and/or scheduling. Because bales 44 having a diameter greater than the oversize bale diameter threshold may cause excessive and/or increased damage to the bearings 60 of the rollers 58, maintenance scheduling may need to be adjusted/accelerated to account for how often the oversize bale diameter threshold is exceeded.

The detailed description and the drawings or figures are supportive and descriptive of the disclosure, but the scope of the disclosure is defined solely by the claims. While some of the best modes and other embodiments for carrying out the claimed teachings have been described in detail, various alternative designs and embodiments exist for practicing the disclosure defined in the appended claims.

## Claims

1. A baler implement comprising:
a support structure;
a housing supported by the support structure;
a gate rotatably coupled to the housing for rotation relative to the housing about a gate rotation axis, between a closed position and an open position;
a bale formation system disposed between the housing and the gate, wherein the bale formation system includes a roller and defines a baling chamber configured for forming crop material into a bale having a cylindrical shape;
a latch mechanism moveable between an engaged position configured to secure the gate in the closed position relative to the housing, and a release position configured to allow relative movement between the gate and the housing;
a latch release coupled to the latch mechanism and configured to move the latch mechanism from the engaged position into the release position;
a bale size sensor operable to sense data related to a diametric size of the bale within the baling chamber and generate a data signal indicative of the sensed data;
a baler controller including a processor and a memory having a bearing protection algorithm stored thereon, wherein the processor is operable to execute the bearing protection algorithm to:
determine a current diametric size of the bale within the baling chamber from the data signal received from the bale size sensor;
determine if the current diametric size of the bale is equal to a pressure release diameter threshold; and
automatically actuate the latch release to move the latch mechanism from the engaged position to the release position when the current diametric size of the bale is equal to the pressure release diameter threshold to relieve baling pressure.

2. The baler implement set forth in claim 1, wherein the processor is operable to execute the bearing protection algorithm to determine if the current diametric size of the bale is equal to a warning diameter threshold, wherein the warning diameter threshold is less than the pressure release diameter threshold.

3. The baler implement set forth in claim 2, wherein the processor is operable to execute the bearing protection algorithm to communicate a notification signal to a communicator when the current diametric size of the bale is equal to the warning diameter threshold, whereby the notification signal is operable to cause the communicator to generate a warning notification.

4. The baler implement set forth in claim 2, wherein the communicator includes one of a visual indicator, an audio indicator, a display screen, or a haptic communicator.

5. The baler implement set forth in claim 1, wherein the processor is operable to execute the bearing protection algorithm to determine if the current diametric size of the bale is equal to an oversize bale diameter threshold, wherein the oversize bale diameter threshold is greater than the pressure release diameter threshold.

6. The baler implement set forth in claim 5, wherein the processor is operable to execute the bearing protection algorithm to increment a current value of an oversize bale counter to define a revised value of the oversize bale counter when the current diametric size of the bale is equal to the oversize bale diameter threshold.

7. The baler implement set forth in claim 6, wherein the processor is operable to execute the bearing protection algorithm to store the revised value of the oversize bale counter in the memory of the baler controller.

8. The baler implement set forth in claim 1, wherein the bale size sensor includes a position sensor coupled to a component of the bale formation system that is configured to change a position relative to the support structure as the diametric size of the bale changes.

9. The baler implement set forth in claim 1, wherein the latch release includes one of an electric actuator or a hydraulic cylinder.

10. The baler implement set forth in claim 1, wherein the bale formation system includes a plurality of rollers, with each of the plurality of rollers including at least one respective bearing rotatably supporting the roller.

11. The baler implement set forth in claim 1, further comprising a latch striker attached to one of the housing and the gate, with the latch mechanism attached to the other of the housing and the gate.

12. A baler implement comprising:
a support structure;
a housing supported by the support structure;
a gate rotatably coupled to the housing for rotation relative to the housing about a gate rotation axis, between a closed position and an open position;
a bale formation system defining a baling chamber configured to form crop material into a bale having a cylindrical shape, and including a roller configured to apply a compressive force against the bale during formation of the bale within the baling chamber;
a bale size sensor operable to sense data related to a diametric size of the bale within the baling chamber and generate a data signal indicative of the sensed data;
a baler controller including a processor and a memory having a bearing protection algorithm stored thereon, wherein the processor is operable to execute the bearing protection algorithm to:
determine a current diametric size of the bale within the baling chamber from the data signal received from the bale size sensor;
determine if the current diametric size of the bale is equal to a pressure release diameter threshold; and
automatically control the bale formation system to decrease the compressive force of the roller applied against the bale when the current diametric size of the bale is equal to the pressure release diameter threshold.

13. The baler implement set forth in claim 12, wherein the processor is operable to execute the bearing protection algorithm to determine if the current diametric size of the bale is equal to a warning diameter threshold, wherein the warning diameter threshold is less than the pressure release diameter threshold.

14. The baler implement set forth in claim 13, wherein the processor is operable to execute the bearing protection algorithm to communicate a notification signal to a communicator when the current diametric size of the bale is qual to the warning diameter threshold, whereby the notification signal is operable to cause the communicator to generate a warning notification, wherein the communicator preferably includes one of a visual indicator, an audio indicator, a display screen, or a haptic communicator.

15. The baler implement set forth in claim 12, wherein the processor is operable to execute the bearing protection algorithm to determine if the current diametric size of the bale is equal to an oversize bale diameter threshold, wherein the oversize bale diameter threshold is greater than the pressure release diameter threshold, wherein the processor preferably is operable to execute the bearing protection algorithm to increment a current value of an oversize bale counter to define a revised value of the oversize bale counter when the current diametric size of the bale is equal to the oversize bale diameter threshold, and store the revised value of the oversize bale counter in the memory of the baler controller.
